Europäisches Patentamt

European Patent Office

Office européen des brevets

(11) Veröffentlichungsnummer: **0 494 617 A2**

## EUROPÄISCHE PATENTANMELDUNG

(21) Anmeldenummer: **92100100.4**

(22) Anmeldetag: **07.01.92**

(51) Int. Cl.⁵: **G06K 7/08**

(30) Priorität: **07.01.91 DE 4100222**

(43) Veröffentlichungstag der Anmeldung:
**15.07.92 Patentblatt 92/29**

(84) Benannte Vertragsstaaten:
**AT BE CH DE DK ES FR GB GR IT LI LU NL SE**

(71) Anmelder: **Gleichauf, Ernst**
**Kniggeweg 25**
**W-2800 Bremen 33(DE)**

(72) Erfinder: **Gleichauf, Ernst**
**Kniggeweg 25**
**W-2800 Bremen 33(DE)**

(74) Vertreter: **Eisenführ, Speiser & Partner**
**Martinistrasse 24**
**W-2800 Bremen 1(DE)**

(54) **Vorrichtung zur berührungslosen Identifikation von Gegenständen.**

(57) Eine Vorrichtung zur berührungslosen Identifikation von Gegenständen (2) umfaßt ein am Gegenstand (2) anzubringendes Identifikationselement (4), das eine definierte Anzahl von Zonen aufweist, von denen jede Zone in Abhängigkeit von einem zu bildenden Codewort wahlweise entweder mit einem elektrisch leitfähigen oder mit einem nichtleitfähigen Werkstoff versehen ist. Eine Leseeinrichtung (6) enthält Sensoren, von denen jeder Sensor eine elektromagnetische Schwingspule aufweist, die ein elektromagnetisches Wechselfeld erzeugt, das bei Annäherung an eine Zone aus leitfähigem Werkstoff im Identifikationselement (4) gedämpft wird, wodurch der Sensor ein entsprechendes Signal abgibt. Die Leseeinrichtung (6) ist an eine Auswerteeinrichtung angeschlossen, die aus den Signalen der Leseeinrichtung (6) das Codewort zur Identifikation des Gegenstandes (2) ermittelt. Im Falle eines Lesefehlers wird die Lesetiefe der Sensoren der Leseeinrichtung (6) solange verändert, bis der ausgelesene Prüfcode im ermittelten Codewort der darin enthaltenen Information eindeutig zugeordnet werden kann. Während des Lesevorganges werden die Sensoren der Leseeinrichtung (8) sequentiell in einzelnen Gruppen derart aktiviert, daß nie zwei benachbarte Sensoren gleichzeitig aktiviert sind.

Fig. 1

EP 0 494 617 A2

Die Erfindung betrifft eine Vorrichtung zur berührungslosen Identifikation von Gegenständen, insbesondere Behältern, mit

- einem am Gegenstand anzubringenden Identifikationselement, das zur Darstellung eines eine bestimmte Information enthaltenden binären Codewortes eine definierte Anzahl von Zonen, von denen jede Zone eine definierte Lage innerhalb des Identifikationselementes einnimmt, und in jeder Zone einen bestimmten Werkstoff aufweist, der aus einer zwei verschiedene Werkstoffe mit unterscheidbaren definierten Eigenschaften umfassenden Gruppe ausgewählt ist,
- einer Leseeinrichtung, die mindestens einen Sensor aufweist, der die Zonen des Identifikationselementes abtastet und bei Annäherung an eine Zone ein entsprechendes Signal abgibt, aus dem erkennbar ist, welchen Werkstoff diese Zone aufweist, und mit
- einer an die Leseeinrichtung angeschlossenen Auswerteeinrichtung, die aus den Signalen der Leseeinrichtung das Codewort zur Identifikation des Gegenstandes ermittelt.

Derartige Vorrichtungen zur berührungslosen Identifikation von Gegenständen sind in vielfältiger Form bekannt, wozu beispielsweise auf die DE-OSen 33 27 964, 30 46 040 und 37 29 740 verwiesen wird. Diese bekannten Verfahren arbeiten nach dem optischen oder magnetischen Prinzip.

Bevorzugt soll die Vorrichtung nach der eingangs genannten Art zur Identifikation von Müllbehältern verwendet werden. Aus Gründen des Umweltschutzes ist es nämlich wünschenswert, zukünftig die Müllbeseitigung verbrauchsabhängig abzurechnen, wozu der im Müllbehälter enthaltene Müll vor seiner Entleerung gewichtsmäßig erfaßt werden muß. Ein Verfahren zur gewichtsmäßigen Erfassung von Müll während des Entleerungsvorganges ist in der DE-PS 34 47 648 beschrieben. Zur Ermittlung des Kunden, dem gegenüber die Müllbeseitigung verbrauchsabhängig abgerechnet werden soll, muß während des Entleerungsvorganges der Müllbehälter entsprechend identifiziert werden. An ein hierfür zu verwendendes Identifikationssystem müssen verschiedene Forderungen gestellt werden, um eine sichere und schnelle Erkennung zu gewährleisten. Zum einen muß die Erkennung berührungslos erfolgen; zum anderen muß das Identifikationssystem robust sein, da es in einer "rauhen" Umgebung eingesetzt wird.

Erste Versuche haben gezeigt, daß die bisher bekannten nach dem optischen oder magnetischen Prinzip arbeitenden Identifikationsvorrichtungen den zuvor erwähnten Anforderungen nicht genügen.

Bei der optisch arbeitenden Erkennungsvorrichtung sind die einzelnen Zonen auf dem Identifikationselement mit unterschiedlichen Farben versehen; in der Regel sind die Zonen entweder schwarz oder weiß gefärbt. Die Leseeinrichtung enthält einen oder mehrere Fotosensoren zur Erkennung der unterschiedlichen Farben der Zonen auf dem Identifikationselement. Bei dieser Vorrichtung muß man jedoch genau darauf achten, daß die Zonen des Identifikationselementes immer erkennbar bleiben. In verschmutzter Umgebung und bei Verschmutzung des Identifikationselementes und/oder der Fotosensoren versagt dieses bekannte System und ist daher gerade zur Identifikation von Müllbehältern ungeeignet.

Bei den bekannten nach dem magnetischen Prinzip arbeitenden Erkennungsvorrichtungen ist jede Zone des Identifikationselementes in Abhängigkeit vom gewünschten Codewort wahlweise entweder mit einem magnetischen oder mit einem nichtmagnetischen Werkstoff versehen. Im allgemeinen werden Plättchen aus permanentmagnetischem Werkstoff verwendet, welche in bestimmten Zonen auf dem Identifikationselement angeordnet sind, welches aus einem nichtmagnetischen Werkstoff besteht. Es ist ebenfalls denkbar, die Permanentmagnetplättchen direkt an dem zu identifizierenden Gegenstand anzubringen, sofern in diesem Abschnitt der Gegenstand aus nichtmagnetischem Material besteht. Die Leseeinrichtung enthält als Sensoren Induktionsspulen, die die vom Identifikationselement erzeugten Magnetfelder erfassen. Diese Vorrichtung besitzt jedoch verschiedene Nachteile. Zum einen ist es recht umständlich, die Magnetplättchen zur Bildung des Identifikationselementes am zu identifizierenden Gegenstand anzubringen. Zum anderen hat sich herausgestellt, daß der magnetische Werkstoff im Laufe der Zeit seine magnetische Wirkung verliert, wodurch die gesamte Vorrichtung unbrauchbar wird. Diesem Nachteil kann zwar dadurch entgegengewirkt werden, daß permanentmagnetische Stoffe wie Seltene Erden verwendet werden, jedoch sind derartige Werkstoffe sehr teuer, was sich wiederum negativ auf den Verkaufspreis der Vorrichtung auswirkt.

Während es sich bei dem Identifikationselement der zuvor beschriebenen bekannten Vorrichtungen um ein passives Element handelte, werden auch in einer großen Zahl Vorrichtungen mit aktiven Identifikationselementen eingesetzt. Diese aktiven Identifikationselemente bestehen gewöhnlicherweise aus einem Chip, der nach Art eines Transponders arbeitet. Zusätzlich zur Leseeinrichtung ist eine Sendeeinrichtung vorgesehen, die bestimmte Abfragesignale aussendet, welche vom Identifikationselement durch Aussenden bestimmter Signale an die Leseeinrichtung beantwortet werden. Zwar arbeiten diese Systeme auch in rauhen Umgebungen recht zuverlässig, so daß die Probleme mit den zuvor beschriebenen Vorrichtungen hier nicht bestehen; jedoch ist der technische Aufwand dieser Systeme beträchtlich, was sich negativ auf die Kosten auswirkt. Außerdem benötigt der Chip im Identifikationselement im allgemeinen eine Stromversorgung in Form einer Batterie, um eine dauerhafte Speicherung von Informationen und den Betrieb des Chips zu ermöglichen.

Aufgabe der Erfindung ist es daher, eine Vorrichtung der eingangs genannten Art zu schaffen, die im Aufbau einfach und robust ist und sich für den Einsatz in rauhen Umgebungen eignet, ohne daß dadurch die Betriebssicherheit leidet.

Diese Aufgabe wird bei einer Vorrichtung der eingangs genannten Art dadurch gelöst, daß

- jede Zone des Identifikationselementes in Abhängigkeit vom gewünschten Codewort wahlweise entweder mit einem elektrisch leitfähigen oder mit einem nichtleitfähigen Werkstoff versehen ist und daß
- der Sensor der Leseeinrichtung eine elektromagnetische Schwingspule aufweist, die ein elektromagnetisches Wechselfeld erzeugt, das bei Annäherung an eine Zone aus leitfähigem Werkstoff gedämpft wird, wodurch der Sensor ein entsprechendes Signal abgibt.

Bei dem Identifikationselement gemäß der Erfindung handelt es sich also um ein passives Element, welches Zonen aus elektrisch leitfähigem Werkstoff und Zonen aus nichtleitfähigem Werkstoff aufweist, wobei die relative Anordnung dieser Zonen zueinander das die bestimmte Information enthaltende binäre Codewort ergibt. Im Gegensatz zu den bekannten nach dem magnetischen Prinzip arbeitenden Erkennungsvorrichtungen braucht bei der Erfindung kein aufwendiger magnetischer Werkstoff verwendet zu werden, sondern lediglich elektrisch leitender Werkstoff, der beispielsweise neben Eisen auch Kupfer, Aluminium oder leitender Kunststoff sein kann. Dadurch ist die Ausbildung des erfindungsgemäßen Identifikationselementes einfacher und kostengünstiger als beim Stand der Technik.

Die erfindungsgemäße Vorrichtung ist jedoch nicht nur in Aufbau und Konstruktion einfach, unkompliziert und somit kostengünstig, sondern auch äußerst robust gegen Kälte und Hitze sowie Verschmutzung und Bewegung und kann daher mit hoher Zuverlässigkeit in rauhen Umgebungen eingesetzt werden, da der Lesevorgang nur durch die Störung des elektromagnetischen Wechselfeldes von den Zonen aus elektrisch leitfähigem Werkstoff bestimmt wird. Daher eignet sich die Erfindung besonders vorteilhaft zur Identifizierung von Müllbehältern.

Auf eine gesonderte Ausbildung von Zonen aus nichtleitfähigem Werkstoff im Identifikationselement kann verzichtet werden, wenn der zu identifizierende Gegenstand zumindest im Bereich des Identifikationselementes aus nichtleitendem Werkstoff besteht.

Vorzugsweise besteht das Identifikationselement aus einer am Gegenstand anbringbaren Folie, insbesondere Selbstklebefolie, mit einer Trägerschicht aus nichtleitendem Werkstoff, auf die die Zonen aus leitfähigem Werkstoff aufgebracht sind. Bei dieser Ausführung, welche sich durch einen besonders einfachen und preiswerten Aufbau des Identifikationselementes auszeichnet, dient als Trägerschicht idealerweise eine handelsübliche doppelseitige Klebefolie, die mit der einen Seite auf dem zu identifizierenden Gegenstand aufgeklebt wird. Auf der anderen Seite werden dann nur die Zonen aus elektrisch leitfähigem Werkstoff aufgebracht. Für diese Codierschicht kann z.B. handelsübliche Aluminium- oder Kupferfolie dienen. Zweckmäßigerweise ist sie durch eine Abdeckschicht gegen Erkennung und/oder Beschädigung geschützt. Hierzu kann ebenfalls eine Selbstklebefolie verwendet werden. Je nach Gestaltung dieser Abdeckfolie ist eine optimale Tarnung des folienartigen Identifikationselementes möglich.

Wie bereits erwähnt, bestimmen die Anordnung, die Form und der verwendete Werkstoff (entweder der elektrisch leitfähigen oder der nichtleitfähigen Art) der Zonen auf dem Identifikationselement das Codewort. Dabei kann die Form der Zonen strichförmig (wie bei dem optischen Barcode im Stand der Technik), rund, rechteckig oder quadratisch sein. Die Zonen des Identifikationselementes können in einer Reihe oder in Matrixform angeordnet sein, wobei die Lage der einzelnen Zonen zur Erfassung durch die Leseeinheit natürlich fest definiert ist.

Vorzugsweise weist die Leseeinrichtung mehrere Sensoren auf, so daß ein paralleles Lesen möglich ist. Insbesondere sollte die Anzahl und Anordnung der Sensoren mit der Anzahl und Anordnung der Zonen des Identifikationselementes übereinstimmen, wobei jeder Sensor einer bestimmten Zone zugeordnet ist.

Um bei dieser Ausführung auf einer gegebenen Fläche des Identifikationselementes möglichst viel Information unterbringen und somit im Codewort eine möglichst hohe Informationsdichte erzielen zu können, sollten die Zonen des Identifikationselementes sowie entsprechend die Sensoren der Leseeinrichtung möglichst dicht zueinander angeordnet werden. In diesem Falle kann jedoch das Problem entstehen, daß die Sensoren bei paralleler Aktivierung sich gegenseitig registrieren und somit stören. Um solche Störungen durch das Vorhandensein eines oder mehrerer benachbarter Sensoren zu vermeiden, kann jeder Sensor der Leseeinrichtung mit Mitteln zur Bündelung des elektromagnetischen Wechselfeldes in Richtung auf die ihm zugeordnete Zone des Identifikationselementes versehen sein, wobei in einer besonderen Ausführung die Mittel zur Bündelung des elektromagnetischen Feldes aus einer die Schwingspule umgebenden, zum Identifikationselement offenen Ferritschale bestehen, die die Feldlinien nur in Richtung auf das Identifikationselement austreten läßt.

Wenn es sich bei dem zu identifizierenden Gegenstand insbesondere um einen Behälter wie z.B. einen Müllbehälter handelt, kann gegebenenfalls das Problem auftreten, daß im Falle einer zu hohen Empfindlichkeit und somit zu großen Lesetiefe der Sensoren nicht nur die aus verschiedenen Werkstoffen bestehenden Zonen des Identifikationselementes, sondern zusätzlich noch irrtümlicherweise die im Behälter hinter dem Identifikationselement befindlichen Gegenstände erfaßt werden, sofern diese Gegenstände aus einem der im Identifikationselement verwendeten Werkstoffe oder einem Werkstoff mit ähnlichen Eigenschaften bestehen. Bei einer zu groß gewählten Lesetiefe wird dann die Abtastung des Identifikationselementes durch die Erfassung der im Behälter dahinterliegenden Gegenstände überlagert, wodurch ein Lesefehler verursacht wird. Dagegen verursacht eine zu klein gewählte Lesetiefe ein unvollkommenes Erkennen der Codierung des Identifikationselementes. Das gleiche gilt bei unbeabsichtigter Vergrößerung des Abstandes durch Schmutzpartikel wie z.B. Steine oder Sand zwischen der Leseeinrichtung und dem Identifikationselement. Im übrigen können auch Fehler aufgrund geometrischer Ungenauigkeiten des Identifikationselementes und der Leseeinrichtung oder durch schiefe Ausrichtung dieser beiden Komponenten zueinander auftreten.

Zur Vermeidung dieser Probleme wird vorgeschlagen, daß

- die Lesetiefe der Sensoren der Leseeinrichtung veränderbar ist,
- eine an die Sensoren angeschlossene Einrichtung zur Einstellung der Lesetiefe der Sensoren vorgesehen ist,
- das im Identifikationselement gebildete Codewort neben der Information zusätzlich noch einen Prüfcode enthält, der nach einem vorgegebenen Algorithmus in Abhängigkeit von der Information gebildet ist und somit zu dieser in eindeutiger und unverwechselbarer Beziehung steht, und daß
- die Auswerteeinrichtung eine Fehlererkennungseinrichtung enthält, die feststellt, ob der ermittelte Prüfcode in dem aus den Signalen der Sensoren der Leseeinrichtung ausgelesenen Codewort nach dem vorgegebenen Algorithmus der ermittelten Information zugeordnet werden kann, und, falls dies nicht möglich ist und somit ein Lesefehler vorliegt, die Einrichtung zur Einstellung der Lesetiefe der Sensoren derart ansteuert, daß die Lesetiefe solange verändert wird, bis der ermittelte Prüfcode der Information eindeutig zugeordnet werden kann.

Mit Hilfe dieser Ausführungen ist es also möglich, bei einer Vorrichtung, die ein passives Identifikationselement verwendet, die Lesefehler zu beseitigen. Dies wird erfindungsgemäß durch eine Kombination aus Auswertung eines Prüfcodes und Variation der Lesetiefe der Sensoren erreicht.

Sofern die Leseeinrichtung mehrere Sensoren enthält, welche zur parallelen Abtastung der Zonen des Identifikationselementes geeignet sind, kann bei einer Weiterbildung der Erfindung die Fehlererkennungseinrichtung im Falle eines Lesefehlers die Einrichtung zur Einstellung der Lesetiefe derart ansteuern, daß die Lesetiefe nur eines bestimmten einzelnen Sensors oder einer bestimmten Gruppe von Sensoren verändert wird.

Zweckmäßigerweise sollte die Fehlererkennungseinrichtung so aufgebaut sein, daß sie aus der Art des Lesefehlers erkennen kann, bei welchen Sensoren die Lesetiefe verändert werden muß.

Der Einfachheit halber kann die Lesetiefe der Sensoren in vorgegebenen konstanten Schritten verändert werden.

Eine bevorzugte Weiterbildung zeichnet sich dadurch aus, daß zu Beginn der Abtastung des Identifikationselementes durch die Leseeinrichtung die Lesetiefe der Sensoren auf einen Maximalwert eingestellt ist und im Falle eines Lesefehlers in Richtung auf einen Minimalwert verringert wird.

An dieser Stelle sei erwähnt, daß die zuvor beschriebene Ausführung, welche zur Vermeidung eines Lesefehlers einen Prüfcode auswertet und die Lesetiefe der Sensoren verändert, auch in Identifikationsvorrichtungen Verwendung finden kann, die nach einem andersartigen Erkennungsprinzip als dem zuvor beschriebenen, wie z.B. nach dem magnetischen Prinzip, arbeiten.

Werden in der Leseeinrichtung mehrere Sensoren verwendet, bei denen die Gefahr einer gegenseitigen Beeinflußung besteht, so kann in einer weiteren bevorzugten Ausführung eine Steuereinrichtung vorgesehen sein, die die Sensoren der Leseeinrichtung während des Lesevorganges sequentiell in einzelnen Gruppen derart aktiviert, daß nie zwei benachbarte Sensoren gleichzeitig aktiviert sind. Durch eine entsprechende Gruppierung kann so ein gruppensequentieller Lesevorgang durchgeführt werden, der beispielsweise wesentlich schneller als sequentielles Lesen der einzelnen Sensoren ist und trotzdem nicht von benachbarten Sensoren gestört wird. Diese Ausführung kann im übrigen auch bei beliebigen Identifikationsvorrichtungen Verwendung finden, die nach einem andersartigen Prinzip als dem zuvor beschriebenen arbeiten, sofern deren Leseeinrichtung mehrere Sensoren enthält, bei denen die Gefahr einer gegenseitigen Störbeeinflußung besteht.

Ferner sei noch darauf hingewiesen, daß zumindest Teile der zuvor beschriebenen Einrichtungen nicht nur hardware- sondern auch softwaremäßig realisiert sein können.

Nachfolgend werden bevorzugte Ausführungsbeispiele der Erfindung anhand der beiliegenden Zeichnungen näher erläutert. Es zeigen:

Fig. 1     eine perspektivische Darstellung eines zu identifizierenden Behälters mit darauf angebrachtem Codeträger und einer Leseeinheit;

Fig. 2     eine vergrößerte perspektivische Vorderansicht der Leseeinheit;

Figuren 3a, b     verschiedene Ausführungen des Codeträgers in Draufsicht; und

Fig. 4     ein schematisches Blockschaltbild der Identifikationsvorrichtung.

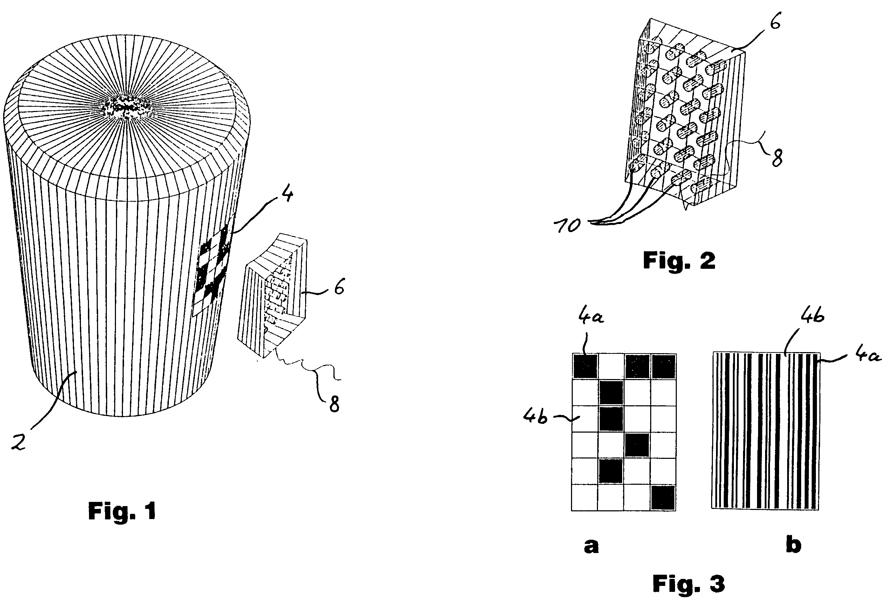

In Fig. 1 ist in perspektivischer Darstellung ein zu identifizierender Behälter 2 gezeigt, auf dessen Außenseite ein Codeträger 4 aufgebracht ist. Der Codeträger 4 enthält in einer nachfolgend näher zu beschreibenden Weise ein Codewort, welches von einer Leseeinheit 6 gelesen wird. Über ein Anschlußkabel 8 ist die Leseeinheit 6 an eine später noch zu beschreibende Auswerteeinheit angeschlossen.

Wie Fig. 2 erkennen läßt, enthält die Leseeinheit 6 eine Vielzahl von Sensoren 10, die matrixförmig in Reihen und Spalten angeordnet sind. Jeder der Sensoren 10 besteht aus einer elektromagnetischen Schwingspule, die ein elektromagnetisches Wechselfeld erzeugt.

Der Codeträger 4 besteht aus einer Selbstklebefolie, die aus drei Schichten aufgebaut ist, nämlich aus einer Trägerschicht, einer Codierschicht und einer Abdeckschicht. Die Trägerschicht ist als handelsübliche doppelseitige Klebfolie ausgeführt, die aus nichtleitendem Werkstoff besteht und mit der einen Seite auf dem zu identifizierenden Behälter 2 aufgeklebt wird. Die andere Seite der Trägerschicht ist in erste Zonen 4a aus elektrisch leitendem Werkstoff und in zweite Zonen 4b aus nichtleitendem Werkstoff unterteilt, wie Fig. 3 erkennen läßt. In Fig. 3 sind zur besseren Unterscheidung die ersten Zonen 4a schwarz und die zweiten Zonen 4b weiß markiert. Da die Trägerschicht aus nichtleitendem Material besteht, werden die zweiten Zonen 4b von dieser gebildet. Als elektrisch leitfähiger Werkstoff wird Aluminium vewendet, der in Form einer Folie in den ersten Zonen 4a auf der Trägerschicht aufgebracht ist. Der Codeträger 4 besteht demnach aus einer Fläche aus nichtleitendem Werkstoff, auf dem in den ersten Zonen 4a Aluminiumfolien aufgebracht sind. Die Anordnung und/oder die Form der ersten Zonen 4a stellt das Codewort dar, das die gewünschte Information enthält. Die Anzahl der Zonen 4a, b ist fest definiert. Die Form der Zonen 4a, b ist ebenfalls fest definiert und kann z.B. quadratisch (vgl. Fig. 3a), strichförmig (vgl. Fig. 3b), rechteckig oder rund sein. Gleichfalls muß die Anordnung der einzelnen Zonen 4a, b fest definiert sein; die Zonen 4a, b können z.B. in einem Rasterfeld (vgl. Fig. 3a) oder in einer Reihe nebeneinander (vgl. Fig. 3b) angeordnet sein.

Aus dem so entstandenen Muster von Zonen 4a, b, kann ein binäres Codewort mit einer definierten Bit-Wertigkeit gebildet werden, wobei jede Zone 4a, b ein Bit und die Position dieser Zone innerhalb des Musters die Wertigkeit des Bits darstellt.

Der folienartige Codeträger 4 kann im vorliegenden Ausführungsbeispiel von einer nicht dargestellten Abdeckfolie gegen Erkennung und/oder Beschädigung geschützt werden. Vorzugsweise kann als Abdeckfolie gleichfalls eine Selbstklebefolie verwendet werden. Je nach Ausführung dieser Abdeckfolie ist eine optimale Tarnung des Codeträgers 4 möglich; z.B. läßt eine Farbgestaltung entsprechend dem zu identifizierenden Behälter 2 den Codeträger 4 nahezu unsichtbar erscheinen, oder ein Werbeaufdruck lenkt von der eigentlichen Aufgabe des Codeträgers 4 in idealer Weise ab.

Sofern der Behälter 2 selbst aus nichtleitendem Material besteht, kann alternativ die Trägerschicht weggelassen werden und können die Aluminiumfolien entsprechend der Anordnung der Zonen 4a direkt auf den Behälter 2 geklebt werden.

Die Sensoren 10 der Leseeinheit 6 stimmen in Anzahl und Anordnung mit den Zonen 4a, b des Codeträgers 4 überein. Die Anzahl der einzelnen Sensoren 10 in der Leseeinheit 6 bestimmt die Auflösegenauigkeit und damit auch die maximal mögliche Informationsdichte des Codeträgers 4. Die Anzahl der zu verwendenden Sensoren 10 wird durch die Größe der Sensoren 10 begrenzt. Wie Fig. 1 erkennen läßt, entspricht die Größe der Leseeinheit 6 der des Codeträgers 4.

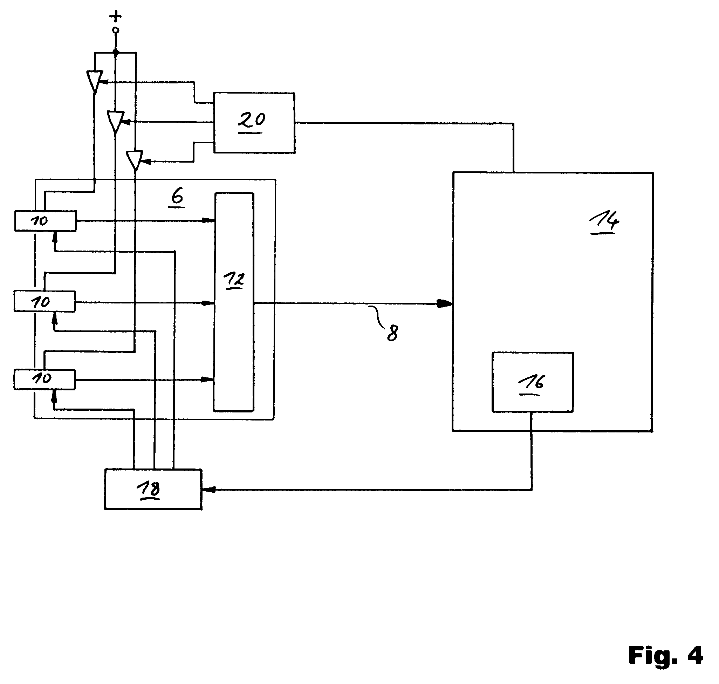

In Fig. 4 ist ein schematisches Blockschaltbild der gesamten Vorrichtung unter Weglassung des Codeträgers 4 gezeigt. Die Leseeinheit 4 enthält eine Interfaceeinheit 12, die die Signale von den Sensoren 10 über das Anschlußkabel 8 an eine Auswerteeinheit 14 überträgt.

Beim Lesevorgang muß die Leseeinheit 6 im wesentlichen parallel zum Codeträger 4 ausgerichtet und in einen Abstand zum Codeträger gebracht werden, der kleiner als die maximale Lesetiefe der Sensoren 10 ist. Die maximale Lesetiefe jedes Sensors 10 wird im wesentlichen von den Abmessungen der elektromagnetischen Schwingspule bestimmt. Jeder Sensor 10 detektiert die ihm zugeordnete Zone und stellt fest, ob die ihm zugeordnete Zone zu den ersten Zonen 4a mit der darauf aufgebrachten Aluminiumfolie oder zu den zweiten Zonen 4b gehört. Diese Unterscheidung kann dadurch festgestellt werden, daß das von der elektromagnetischen Schwingspule erzeugte elektromagnetische Wechselfeld durch die Aluminiumfolie in den ersten Zonen 4a gestört wird. Durch Bildung von Induktionsspannung in der Aluminiumfolie wird dem elektromagnetischen Schwingfeld Energie entzogen, was zu einer Dämpfung der Schwingungsamplitude führt. Sofern die Schwingungsdämpfung eine bestimmte Größe erreicht, wird die Schwindungsdämpfung von der Interfaceeinheit 12 in der Leseeinheit 6 als Erkennungssignal interpretiert, daß es sich bei der detektierten Zone um eine der ersten Zonen 4a handelt. Dagegen findet eine Störung des elektromagnetischen Wechselfeldes durch die zweiten Zonen 4b nicht statt, da diese nichtleitenden Werkstoff aufweisen.

Die Erkennungssignale aller einzelner Sensoren 10 werden von der Interfaceeinheit 12 der Leseeinheit 6 über das Anschlußkabel 8 an die Auswerteeinheit 14 übermittelt und dort zur Erkennung der Information decodiert. Die Auswerteeinheit 14 besteht aus einer intelligenten elektronischen Schaltung und enthält einen Mikroprozessor. Die hier ermittelte Information wird dann über eine nicht dargestellte Schnittstelle zur Abspeicherung und/oder Weiterverarbeitung zur Verfügung gestellt.

Um die gelesene Information auf Fehler zu überprüfen, enthält das im Codeträger 4 gebildete Codewort neben der eigentlichen Information zusätzlich noch einen Prüfcode. Dieser Prüfcode ist nach einem vorgegebenen Algorithmus in Abhängigkeit von der Information gebildet und steht somit in eindeutiger und unverwechselbarer Beziehung zu dieser. Die Auswerteeinheit 14 decodiert aus den von der Leseeinheit 6 übertragenen Signalen nicht nur die im Codewort enthaltene Information, sondern auch den Prüfcode. Die Auswerteeinheit 14 enthält eine Fehlererkennungseinheit 16, die aus der ausgelesenen Information einen Prüfcode nach dem vorgegebenen Algorithmus ermittelt und diesen aus der ausgelesenen Information ermittelten Prüfcode mit dem ausgelesenen Prüfcode selbst vergleicht. Falls der aus der gelesenen Information ermittelte Prüfcode mit dem gelesenen Prüfcode selbst nicht übereinstimmt, liegt ein Fehler vor. Dabei ist es unwesentlich, ob die gelesene Information oder der gelesene Prüfcode den Fehler enthält. Entscheidend ist im allgemeinen nur die Erkennung eines Fehlers an sich.

Wie zuvor erwähnt wurde, ist der Lesevorgang durch das Erkennen einer Dämpfung des von der elektromagnetischen Schwingspule im Sensor 10 erzeugten Wechselfeldes gekennzeichnet. Da diese Dämpfung durch jede Einbringung eines leitfähigen Materials kontinuierlich veränderbar hervorgerufen wird, muß der Lesevorgang durch einen eindeutigen Dämpfungswert gekennzeichnet sein. Ein solcher eindeutiger Dämpfungswert legt damit aber auch einen eindeutigen Leseabstand für die Leseeinheit 6 fest, so daß die Lesetiefe der Sensoren 10 entsprechend eingestellt werden kann. Es hat sich jedoch gezeigt, daß der Leseabstand von Behälter zu Behälter in der Praxis nicht exakt eingehalten werden, sondern varrieren kann. Ein zu großer Abstand zwischen Leseeinheit 6 und Codeträger 4 oder eine zu geringe Lesetiefe der Sensoren 10 verursachen eine unvollkommene Erfassung der Codierung. Eine zu groß gewählte Lesetiefe oder ein zu geringer Abstand zwischen Leseeinheit 6 und Codeträger 4 würden diesen Mangel zwar beheben, aber auf der anderen Seite dazu führen, daß auch elektrisch leitfähiges Material (z.B. Metallkörper o.dgl.), das sich jenseits des Codeträgers 4 im Behälter 4 befindet, erkannt und als Information interpretiert wird.

Es ist daher eine Justierschaltung 18 vorgesehen, die an jeden einzelnen Sensor 10 angeschlossen ist und dessen Lesetiefe einstellt oder verändern kann. Gesteuert wird die Justierschaltung 18 von der Fehlererkennungseinheit 16, wozu die Justierschaltung 18 ebenfalls auch an der Auswerteeinheit 14 angeschlossen ist. Stellt nun die Fehlererkennungseinheit 16 einen Lesefehler fest, so steuert diese die Justierschaltung 18 an, woraufhin diese die Lesetiefe der Sensoren 10 verändert. Anschließend prüft die Fehlererkennungseinheit 16, ob der Lesefehler weiterhin vorliegt, und, falls dies der Fall ist, steuert die Justierschaltung 18 ein weiteres Mal an. Die Justierschaltung 18 verändert unter dem Einfluß der Fehlererkennungseinheit 16 die Lesetiefe der Sensoren so lange, bis die Fehlererkennungseinheit 16 feststellt, daß der aus den gelesenen Informationen ermittelte Prüfcode mit dem gelesenen Prüfcode selbst übereinstimmt. Die Bandbreite der einstellbaren Lesetiefe ist durch die maximale Lesetiefe der verwendten Sensoren 10 begrenzt.

Die Fehlererkennungseinheit 16 kann im Falle eines Lesefehlers die Justierschaltung 18 derart ansteuern, daß die Lesetiefe nur eines bestimmten einzelnen Sensors oder einer bestimmten Gruppe von Sensoren verändert wird, wobei die Fehlererkennungseinheit 16 aus der Art des Lesefehlers erkennen kann, bei welchen Sensoren 10 die Lesetiefe verändert werden muß. Die Justierschaltung 18 verändert die Lesetiefe in fest vorgegebenen konstanten Schritten. Der Abtast- und Fehlererkennungsmodus kann so eingestellt sein, daß zu Beginn der Abtastung des Codeträgers 4 die Lesetiefe der Sensoren 10 auf einen Maximalwert eingestellt ist und im Falle eines von der Fehlererkennungseinheit 16 festgestellten Lesefehlers in Richtung auf einen Minimalwert verringert wird.

Um auf einer gegebenen Fläche der Leseeinheit 6 möglichst viel Information unterbringen und eine möglichst hohe Informationsdichte erzielen zu können, sind die einzelnen Sensoren 10 möglichst dicht zueinander angeordnet. Hieraus kann sich das Problem ergeben, daß die Sensoren 10 sich gegenseitig registrieren und damit als erkannte Information interpretieren. Um diese Störung durch das Vorhandensein eines benachbarten Sensors zu vermeiden, werden in der beschriebenen Ausführung zwei Maßnahmen ergriffen, auf die nachfolgend näher eingegangen werden.

Die Form der elektromagnetischen Schwingspule jedes Sensors 10 ist so gewählt, daß das elektromagnetische Wechselfeld stark gebündelt in Richtung auf den Codeträger 4 verläuft. Dies wird beispielsweise durch die Verwendung von nur zum Codeträger 4 hin offenen Ferrithalbschalen erreicht, bei denen die Feldlinien nur zu der offenen Seite hin austreten können.

Außerdem ist eine Steuerschaltung 20 vorgesehen die jeden einzelnen Sensor 10 individuell ein- und ausschalten kann. Die einzelnen Sensoren 10 werden nun von der Steuerschaltung 20 in Abhängigkeit von der Auswerteeinheit 14 während des Lesevorgangs sequentiell in einzelnen Gruppen derart akitivert, daß nie zwei benachbarte Sensoren 10 gleichzeitig aktiviert sind. Durch eine entsprechende Gruppierung kann mittels einer einfachen Schaltung ein relativ schneller gruppensequentieller Lesevorgang durchgeführt werden.

Abschließend ist anzumerken, daß zwar in den Figuren 1 und 2 die Leseeinheit 6 mit 24 Sensoren 10 und in Fig. 4 der Einfachheit halber nur mit drei Sensoren 10 dargestellt ist; jedoch gibt es für die Anzahl der zu verwenden Sensoren keine bestimmte Grenze.

**Patentansprüche**

1. Vorrichtung zur berührungslosen Identifikation von Gegenständen, insbesondere Behältern (2), mit
   - einem am Gegenstand (2) anzubringenden Identifikationselement (4), das zur Darstellung eines eine bestimmte Information enthaltenden binären Codewortes eine definierte Anzahl von Zonen (4a, b), von denen jede Zone (4a; b) eine definierte Lage innerhalb des Identifikationselementes (4) einnimmt, und in jeder Zone (4a, b) einen bestimmten Werkstoff aufweist, der aus einer zwei verschiedene Werkstoffe mit unterscheidbaren definierten Eigenschaften umfassenden Gruppe ausgewählt ist,
   - einer Leseeinrichtung (6), die mindestens einen Sensor (10) aufweist, der die Zonen (4a, b) des Identifikationselementes (4) abtastet und bei Annäherung an eine Zone (4a, b) ein entsprechendes Signal abgibt, aus dem erkennbar ist, welchen Werkstoff diese Zone (4a, b) aufweist, und mit
   - einer an die Leseeinrichtung (6) angeschlossenen Auswerteeinrichtung (14), die aus den Signalen der Leseeinrichtung (6) das Codewort zur Identifikation des Gegenstandes (2) ermittelt;
   dadurch gekennzeichnet, daß
   - jede Zone (4a, b) des Identifikationselementes (4) in Abhängigkeit vom gewünschten Codewort wahlweise entweder mit einem elektrisch leitfähigen oder mit einem nichtleitfähigen Werkstoff versehen ist und daß
   - der Sensor (10) der Leseeinrichtung (6) eine elektromagnetische Schwingspule aufweist, die ein elektromagnetisches Wechselfeld erzeugt, das bei Annäherung an eine Zone (4a) aus leitfähigem Werkstoff gedämpft wird, wodurch der Sensor (10) ein entsprechendes Signal abgibt.

2. Vorrichtung nach Anspruch 1,
   dadurch gekennzeichnet, daß der zu identifizierende Gegenstand (2) zumindest im Bereich des Identifikationselementes (4) aus nichtleitendem Werkstoff besteht.

3. Vorrichtung nach Anspruch 1 oder 2,
   dadurch gekennzeichnet, daß der elektrisch leitfähige Werkstoff Metall, insbesondere Kupfer oder Aluminium, ist.

4. Vorrichtung nach einem der Ansprüche 1 bis 3,
   dadurch gekennzeichnet, daß das Identifikationselement (4) aus einer am Gegenstand (2) anbringbaren Folie, insbesondere Selbstklebefolie, mit einer Trägerschicht aus nichtleitfähigem Werkstoff besteht, auf die die Zonen (4a) aus leitfähigem Werkstoff aufgebracht sind.

5. Vorrichtung nach Anspruch 4,
   dadurch gekennzeichnet, daß das Identifikationselement (4) mit einer Abdeckschicht versehen ist.

6. Vorrichtung nach einem der Ansprüche 1 bis 5,
   dadurch gekennzeichnet, daß die Form sämtlicher Zonen (4a, b) des Identifikationselementes (4) strichförmig, rund, rechteckig oder quadratisch ist.

7. Vorrichtung nach einem der Ansprüche 1 bis 6,
dadurch gekennzeichnet, daß sämtliche Zonen (4a, b) des Identifikationselementes (4) in einer Reihe oder in Matrixform angeordnet sind.

8. Vorrichtung nach einem der Ansprüche 1 bis 7,
dadurch gekennzeichnet, daß die Leseeinrichtung (6) mehrere Sensoren (10) aufweist.

9. Vorrichtung nach Anspruch 8,
dadurch gekennzeichnet, daß die Anzahl und Anordnung der Sensoren (10) mit der Anzahl und Anordnung der Zonen (4a, b) des Identifikationselementes (4) übereinstimmen, wobei jeder Sensor (10) einer bestimmten Zone (4a, b) zugeordnet ist.

10. Vorrichtung nach Anspruch 8 oder 9,
dadurch gekennzeichnet, daß jeder Sensor (10) der Leseeinrichtung (6) mit Mitteln zur Bündelung des elektromagnetischen Wechselfeldes in Richtung auf die ihm zugeordnete Zone (4a bzw. 4b) des Identifikationselementes (4) versehen ist.

11. Vorrichtung nach Anspruch 10,
dadurch gekennzeichnet, daß die Mittel zur Bündelung des elektromagnetischen Feldes aus einer die Schwingspule umgebenden, zum Identifikationselement (4) offenen Ferritschale bestehen, die die Feldlinien nur in Richtung auf das Identifikationselement (4) austreten läßt.

12. Vorrichtung zur berührungslosen Identifikation von Gegenständen, insbesondere Behältern (2), insbesondere nach einem der Ansprüche 1 bis 10, mit
- einem am Gegenstand (2) anzubringenden Identifikationselement (4), das zur Darstellung eines eine bestimmte Information enthaltenden binären Codewortes eine definierte Anzahl von Zonen (4a, b), von denen jede Zone (4a; b) eine definierte Lage innerhalb des Identifikationselementes (4) einnimmt, und in jeder Zone (4a, b) einen bestimmten Werkstoff aufweist, der aus einer zwei verschiedene Werkstoffe mit unterscheidbaren definierten Eigenschaften umfassenden Gruppe ausgewählt ist,
- einer Leseeinrichtung (6), die mindestens einen Sensor (10) aufweist, der die Zonen (4a, b) des Identifikationselementes (4) abtastet und bei Annäherung an eine Zone (4a, b) ein entsprechendes Signal abgibt, aus dem erkennbar ist, welchen Werkstoff diese Zone (4a, b) aufweist, und mit
- einer an die Leseeinrichtung (6) angeschlossenen Auswerteeinrichtung (14), die aus den Signalen der Leseeinrichtung (6) das Codewort zur Identifikation des Gegenstandes (2) ermittelt;
dadurch gekennzeichnet, daß
- die Lesetiefe der Sensoren (10) der Leseeinrichtung (6) veränderbar ist,
- eine an die Sensoren (10) angeschlossene Einrichtung (18) zur Einstellung der Lesetiefe der Sensoren (10) vorgesehen ist,
- das im Identifikationselement (4) gebildete Codewort neben der Information zusätzlich noch einen Prüfcode enthält, der nach einem vorgegebenen Algorithmus in Abhängigkeit von der Information gebildet ist und somit zu dieser in eindeutiger und unverwechselbarer Beziehung steht, und daß
- die Auswerteeinrichtung (14) eine Fehlererkennungseinrichtung (16) enthält, die feststellt, ob der ermittelte Prüfcode in dem aus den Signalen der Sensoren (10) der Leseeinrichtung (6) ausgelesenen Codewort nach dem vorgegebenen Algorithmus der ermittelten Information zugeordnet werden kann, und, falls dies nicht möglich ist und somit ein Lesefehler vorliegt, die Einrichtung (18) zur Einstellung der Lesetiefe der Sensoren (10) derart ansteuert, daß die Lesetiefe solange verändert wird, bis der ermittelte Prüfcode der Information eindeutig zugeordnet werden kann.

13. Vorrichtung nach Anspruch 12, bei welchem die Leseeinrichtung (6) mehrere Sensoren (10) enthält, dadurch gekennzeichnet, daß die Fehlererkennungseinrichtung (16) im Falle eines Lesefehlers die Einrichtung (18) zur Einstellung der Lesetiefe derart ansteuert, daß die Lesetiefe nur eines bestimmten einzelnen Sensors oder einer bestimmten Gruppe von Sensoren (10) verändert wird.

14. Vorrichtung nach Anspruch 13,
dadurch gekennzeichnet, daß die Fehlererkennungseinrichtung (16) aus der Art des Lesefehlers erkennen kann, bei welchen Sensoren (10) die Lesetiefe verändert werden muß.

**15.** Vorrichtung nach einem der Ansprüche 12 bis 14,
dadurch gekennzeichnet, daß die Lesetiefe der Sensoren (10) in vorgegebenen konstanten Schritten veränderbar ist.

**16.** Vorrichtung nach einem der Ansprüche 12 bis 15,
dadurch gekennzeichnet, daß zu Beginn der Abtastung des Identifikationselementes (4) durch die Leseeinrichtung (6) die Lesetiefe der Sensoren (10) auf einen Maximalwert eingestellt ist und im Falle eines Lesefehlers in Richtung auf einen Minimalwert verringert wird.

**17.** Vorrichtung nach einem der Ansprüche 1 bis 16,
dadurch gekennzeichnet, daß während der Abtastung des Identifikationselementes (4) die Leseeinrichtung (6) in einem fest vorgegebenen Leseabstand zum Identifikationselement (4) angeordnet ist.

**18.** Vorrichtung zur berührungslosen Identifikation von Gegenständen, inbesondere Behältern (2), insbesondere nach einem der Ansprüche 1 bis 17, mit

- einem am Gegenstand (2) anzubringenden Identifikationselement (4), das zur Darstellung eines eine bestimmte Information enthaltenden binären Codewortes eine definierte Anzahl von Zonen (4a, b), von denen jede Zone (4a; b) eine definierte Lage innerhalb des Identifikationselementes (4) einnimmt, und in jeder Zone (4a, b) einen bestimmten Werkstoff aufweist, der aus einer zwei verschiedene Werkstoffe mit unterscheidbaren definierten Eigenschaften umfassenden Gruppe ausgewählt ist,
- einer Leseeinrichtung (6), die mehrere Sensoren (10) aufweist, von denen ein Sensor (10) eine Zone (4a, 4b) des Identifikationselementes (4) abtastet und bei Annäherung an die betreffende Zone (4a, b) ein entsprechendes Signal abgibt, aus dem erkennbar ist, welchen Werkstoff diese Zone (4a, b) aufweist, und mit
- einer an die Leseeinrichtung (6) angeschlossenen Auswerteeinrichtung (14), die aus den Signalen der Leseeinrichtung (6) das Codewort zur Identifikation des Gegenstandes (2) ermittelt;

gekennzeichnet durch

- eine Steuereinrichtung (20), die die Sensoren (10) der Leseeinrichtung (6) während des Lesevorganges sequentiell in einzelnen Gruppen derart aktiviert, daß nie zwei benachbarte Sensoren (10) gleichzeitig aktiviert sind.

**Fig. 1**

**Fig. 2**

**Fig. 3**

a

b

EP 0 494 617 A2

Fig. 4